# EUROPEAN PATENT APPLICATION

(11) **EP 3 603 386 A1**
(43) Date of publication of application: **05.02.2020**
(21) Application number: 19194410.7
(22) Date of filing: 23.03.2017
(51) Int. Cl.: A01K 5/01, A01K 7/00

(54) **PET FEEDING SYSTEM**

(30) Priority: 04.04.2016 US 201615089863
(62) Divisional of application: 17779518.4
(71) Applicant: MacNeil IP LLC, Bolingbrook, IL 60440 (US)
(72) Inventor: MacNeil, David F., Fort Lauderdale, FL 33316 (US); Masanek, Jr., Frederick W., Barrington, IL 60010 (US)
(74) Representative: Adamson Jones

(57) **Abstract**

A top surface (1218) of an elevating stand (1200) of a pet feeding system defines bowl receptacles (1212, 1214) into which respective food and water bowls (1216) may be removably installed. A first zone of the top surface of the stand includes an upwardly convex ring (1226) that laterally surrounds a respective bowl receptacle. A second zone of the top surface of the stand laterally surrounds the first zone, except as interrupted by a finger notch (1230). Each bowl has a peripheral lip (1240) with a lower surface formed as a downwardly concave ring that fits over the upwardly convex ring of the stand. An edge of the bowl rests on the second zone at a location below the upper limit of the convex ring (1244). A base of the stand cooperates with upstanding ribs (1502, 1504) in an elastomeric mat (1500) to prevent lateral movement of the stand and to prevent rotation of the stand around the stand center.

## Description

### BACKGROUND OF THE INVENTION

A traditional way to feed a dog or a cat is to place a bowl of food and a bowl of water on the floor. More recently, pet feeding stations have been developed which elevate the food and water bowls off of the floor. This puts the food and water at a convenient height for the pet.

Dogs in particular can be messy eaters. The optimum pet feeding station or system is one that is easily accessible by the pet, is easy to clean and that generates a minimum of stray food and water. As a cat, or more particularly, a dog, eats, there may be a tendency for the food and water bowl to slide around; these quadrupeds usually do not hold their food or water bowls in place with their paws. A larger dog may be big enough to easily displace its food or water bowl with motions of its head alone. Because they are thus apt to be sources of stray food particles, pet feeding sites equipped with conventional containers sometimes attract unwanted pests.

Dogs in particular have elongated noses and mandibles. A traditional pet bowl has an interior surface that is shaped like a flattened hemisphere, providing a poor match to the shape of a typical dog's head. This makes eating incrementally more difficult for the dog and the mismatch in shape is apt to generate more stray food particles and water splashes. A need therefore exists for a pet feeding system that minimizes awkwardness or discomfort for the pet while at the same time contains and manages the detritus generated by a pet eating its dinner.

### SUMMARY OF THE INVENTION

A pet feeding system according to one aspect of the invention has a stand and at least one bowl removably received in a respective bowl opening formed in the top surface of the stand. As so installed, an upper edge of the bowl resides substantially in a horizontal top plane. The bowl is elongated such that a first radius from a vertical bowl axis to the bowl upper edge, drawn in the top plane and toward the front of the stand, is greater than a second radius from that axis to the bowl upper edge, drawn in the top plane and toward the side of the stand.

Preferably, an angle of the bowl interior surface at a front portion thereof, and taken with respect to a vertical reference, is greater than a corresponding angle of the bowl interior surface at a side and/or rear portion thereof. The front elongation of the bowl and the gradualness of the draft of the bowl front section make access to the bowl more comfortable to a feeding pet, particularly a pet with a pronounced nose and mandible such as a dog.

In another aspect of the invention, a pet feeding system has a stand with a top surface that defines at least one bowl opening formed around a vertical axis. A bowl is removably received in the bowl opening. An upper edge of the bowl substantially resides in a top plane orthogonal to the axis. The bowl has a peripheral lip that extends radially outwardly in the top plane from the bowl's upper edge. This lip has a predetermined width. The top surface of the stand consists of two zones: a first zone, immediately surrounding the bowl opening, which has a width that is substantially no more than the bowl lip width, and a second zone, laterally spaced from the bowl opening by the first zone. All of the surface of the second zone is downwardly sloped, so as to better shed stray food and water particles. In embodiments providing first and second bowls, the first zone has a first portion immediately surrounding a first bowl opening and a second portion immediately surrounding a second bowl opening. A width of the second portion is substantially no more than the predetermined bowl lip width. The second, downwardly sloped zone of the top surface separates the first portion of the first zone from the second portion of the first zone.

In a further aspect of the invention, a pet feeding system has a stand with a top surface. First and second spaced-apart bowl openings are formed in the top surface of the stand. Each bowl opening has a curved perimeter. A front-to-back diameter of the opening, drawn at a right angle to an axis of the opening, is greater than a side-to-side diameter of the opening. A bowl is furnished for each bowl opening. Each bowl is adapted to be manually placed in the opening and removed from the opening and has an oblong shape that mates to the curved perimeter of its respective bowl opening.

In another aspect of the invention, a pet feeding system has a stand. A top surface of the stand defines at least first and second spaced-apart bowl openings. A bowl is removably received into each bowl opening. As so received, an upper edge of each of the bowls substantially resides in a horizontal top plane. For each bowl, a first radius, drawn from a vertical bowl axis to the upper edge of the bowl and toward the front of the stand, is greater than a second radius, drawn from the vertical bowl axis to the upper edge of the bowl and toward the side of the stand. In one embodiment, the longest radii of the bowls are parallel to each other. In one embodiment, a draft of a front portion of each bowl is more gradual than a draft of a side portion of each bowl, making pet access to the bowl easier.

In a further aspect of the invention, a pet feeding system includes a stand, at least one bowl, and a mat. A top surface of the stand defines an opening into which the bowl is removably received. Structure in the mat cooperates with structure in the base of the stand to prevent displacement of the stand in any lateral direction, and to prevent rotation around a stand center relative to the mat. In one embodiment, this mat structure is laterally interior to the stand base and includes at least one raised feature, relative to a general upper surface of the mat. The raised feature cooperates with a nonhorizontal surface of the base. In an embodiment, the stand has first and second side walls that extend downwardly from the stand top surface and that each terminate in a foot. The mat has first and second raised features, laterally exterior surfaces of which cooperate with respective interior surfaces of the first and second walls. As assembled, the mat raised features are interior to the stand walls, preferably out of sight and sheltered from food particles and water. In one embodiment, an area of the mat that is forward of the stand is more extensive than is an area of the mat to the rear of the stand, accommodating the front paws of the pet.

In one aspect of the invention, the pet feeding system has enhanced resistance to shear forces that may be exerted (by the pet or otherwise) from the front, rear or sides. The bowl upper edges are inwardly displaced from a shoulder of the stand top surface, and this shoulder is in turn inwardly displaced from the stand base. The inclined front, back and side walls of the stand are braced against front, rear or side impacts.

In yet another aspect of the invention, a pet feeding system has a stand, at least one bowl receptacle formed in the top of the stand, and at least one bowl for removable installation in the bowl. A top surface of the top of the stand has first and second zones. The first zone is disposed to be adjacent the periphery of the bowl receptacle and has an upwardly convex ring that completely laterally surrounds the bowl receptacle. A second zone extends radially outwardly from the first zone and is disposed below an upper limit of the convex ring. A lower surface of a peripheral lip of the bowl is formed as a concave ring that fits over the convex ring of the stand top surface. In an embodiment, an edge of the peripheral lip of the bowl rests on the second zone of the top surface, such that it will be lower than the upper limit of the convex ring.

In one embodiment, a sidewall of the bowl receptacle slopes downwardly and inwardly from the convex ring. The slope of the sidewall varies as a function of the lateral angle around the bowl axis, and can be much more gentle to the front of the bowl receptacle than it is to the rear. A slope of the bowl sidewall varies in the same way, with the slope of the bowl being substantially similar to, but a little steeper than, the slope of the bowl receptacle at any particular horizontal angle around the bowl axis and in any particular horizontal plane.

In an embodiment, a finger notch interrupts the second zone of the stand top surface, but not the upwardly convex ring. A floor of the finger notch is located below the elevation of the second zone of the stand top surface and proceeds inwardly until an inner wall, which is radially inward of a bowl edge when the bowl is installed in the bowl receptacle. The permits the easy removal of the bowl from the bowl receptacle for cleaning and filling.

In another aspect of the invention, a pet feeding system includes a mat and at least one bowl, but doesn't include a stand. Instead, a central pier or mesa is integrally molded with the mat to extend upward from a general and peripheral top surface of the mat. At least one bowl receptacle is formed in the pier top surface. The pier top surface has a first zone with an upwardly convex ring that laterally surrounds the bowl receptacle. A second zone of the pier top surface adjoins the first zone and extends radially outwardly therefrom. The second zone either may be flat or radially outwardly and downwardly sloped. A lower surface of a peripheral lip of the bowl is formed as a downwardly concave ring, so as to fit over the upwardly convex ring on the pier top surface. In one embodiment, a finger notch interrupts the second zone surrounding the bowl receptacle but not the convex ring, and has a floor that is disposed lower than the second zone. This permits the insertion of a finger so as to easily remove the bowl from the pier, as for cleaning and filling. In one embodiment the bowl receptacle is closed so that there is no opening to the bottom surface of the mat.

According to a further aspect, there is provided a pet feeding system comprising: a stand having a front, a back opposed to the front, first and second sides joining the front to the back, and a top connecting the front, back and first and second sides, the top defining at least one bowl opening, at least one wall of the stand extending downwardly from the top and terminating in at least one stand base; at least one bowl removably received in said at least one bowl opening; and a mat, the stand removably positioned on the mat on a stand vertical center, structure in the mat cooperating with structure of said at least one stand base to prevent lateral displacement in any lateral direction of the stand relative to the mat and preventing rotation of the stand around the vertical stand center relative to the mat, all of said structure in the mat being disposed laterally interiorly of said at least one stand base.

The mat may have a general upper surface for receiving the stand base, said structure of the mat including at least one raised feature extending upwardly from the general upper surface of the mat, the at least one raised feature mating with a nonhorizontal surface of the stand base. The at least one wall of the stand may have an interior surface facing the stand vertical center, the at least one raised feature disposed laterally interiorly of the interior surface of the at least one wall. The at least one wall of the stand may be a first side wall forming the first side of the stand and terminating in a first stand foot, a second side wall of the stand forming the second side of the stand and terminating in a second stand foot, each of the first and second side walls having a respective interior surface, said at least one raised feature of the mat being one of first and second raised features formed on the mat, a laterally exterior surface of the first raised feature fitting to the interior surface of the first side wall, a laterally exterior surface of the second raised feature fitting to the interior surface of the second side wall.

The lateral exterior surfaces of the first and second raised features of the mat may be upwardly and inwardly sloped relative to the vertical stand center.

The interior surface of the first side wall and the interior surface of the second side wall may be concavely arcuate relative to the vertical stand center, the lateral exterior surfaces of the first and second raised features of the mat being convexly arcuate relative to the stand vertical center.

A radius of arc of the lateral exterior surfaces of the first and second raised features of the mat may be smaller than a lateral distance from the lateral exterior surfaces to the stand vertical center.

The first and second raised features of the mat may be hollow ribs.

The stand base may include a foot flange that extends laterally outwardly relative to the stand vertical center from the at least one wall of the stand.

The mat may have a top surface with an area, said at least one stand base defining a lateral area that is less than the area of the top surface of the mat, the mat having a front area disposed to the front of said at least one stand base and a rear area disposed to the rear of said at least one stand base, the front area of the mat being greater than the rear area of the mat. A front margin of the mat may be convexly curved, a rear margin of the mat being straight.

The first raised feature may be a first rib and the second raised feature may be a second rib, the first and second ribs being spaced apart from each other in a transverse direction and being concavely arcuate relative to a center of a mat; and a top surface of the mat extending between the first and second ribs being convexly vaulted in a front-to-rear direction.

The top of the stand may define first and second spaced-apart bowl openings, for each bowl opening, a bowl removably received therein, an upper edge of all of the bowls substantially residing in a horizontal top plane; and each bowl disposed on a vertical bowl axis orthogonal to the top plane and spaced from the center of the stand, a first radius of the bowl drawn in the top plane from the bowl axis to the upper edge of the bowl proximate the front of the stand being greater than a second radius of the bowl drawn in the top plane from the bowl axis to a the upper edge of the bowl proximate a side of the stand. The upper edge of each bowl may have a front portion disposed proximate the front of the stand and a side portion disposed proximate to a side of the stand, for each bowl, a draft from the front portion of the upper edge of the bowl to the bowl axis being more gradual than a draft from the side portion of the upper edge of the bowl to the bowl axis.

According to a further aspect, there is provided a pet feeding system comprising: a mat having an upper surface; a central pier integrally molded with the mat, a sidewall of the pier upwardly extending from the upper surface of the mat to a top surface of the pier; at least one bowl receptacle formed in the top surface of the pier and on a vertical axis, a first zone of the top surface of the pier disposed adjacent to the at least one bowl receptacle, the first zone including an upwardly convex ring laterally surrounding the at least one bowl receptacle, a second zone of the top surface of the pier formed to adjoin the first zone and to radially outwardly extend from the first zone, the second zone of the top surface of the pier being either flat or radially outwardly and downwardly sloped, a third zone of the top surface of the pier laterally surrounding the second zone, all points on the third zone of the top surface of the pier being radially outwardly and downwardly sloped; and at least one bowl adapted to be received in the at least one bowl receptacle, a lower surface of a peripheral lip of the bowl forming a downwardly concave ring fitting over the upwardly convex ring of the at least one bowl receptacle.

The peripheral lip of the at least one bowl may have an outer edge, the outer edge resting on the second zone of the top surface of the pier when the bowl is installed in the at least one bowl receptacle.

The second zone of the top surface of the pier may laterally surround the first zone of the top surface of the pier except where the second zone is interrupted by a finger notch, the finger notch inwardly extending from the sidewall of the pier to the first zone, a floor of the finger notch being disposed to be lower than the second zone.

The mat may have a lower surface, the at least one bowl receptacle being closed and forming no opening through the top of the pier to the lower surface of the mat.

The pier may have a front, a rear opposed to the front, and sides joining the front to the rear, the at least one bowl being oblong and having an upper periphery, a major axis of the bowl taken at the upper periphery in a front-to-rear direction being greater than a minor axis of the bowl taken at the upper periphery in a side-to-side direction.

The at least one bowl receptacle may be one of first and second laterally spaced apart bowl receptacles, second zones respectively surrounding the first and second bowl receptacles and being spaced apart by a third zone of the pier top surface, the at least one bowl being one of first and second bowls adaptable to be respectively installed into and removed from the first and second bowl receptacles.

### BRIEF DESCRIPTION OF THE DRAWINGS

Further aspects of the invention and their advantages can be discerned in the following detailed description, in which like characters denote like parts and in which:
FIGURE 1 is a top isometric view of a pet feeding system according to the invention, shown in assembled condition;
FIGURE 1A is a drawing of a three-dimensional frame of reference used in describing the invention;
FIGURE 2 is an exploded isometric view of the pet feeding system introduced in FIGURE 1;
FIGURE 3 is a top view of a bowl for use with the invention;
FIGURE 4 is a side view of the bowl shown in FIGURE 3;
FIGURE 5 is a schematic side view of the bowl shown in FIGUREs 3 and 4, showing the relationship of the bowl interior surface to the nose and jaw of a feeding dog;
FIGURE 6 is a side elevational detail of a bowl as installed in a bowl opening of a stand;
FIGURE6A is a side elevational detail of an alternative bowl according to the invention;
FIGURE 6B is a schematic view of a bowl periphery taken in a top plane thereof, to show a possible bowl geometry;
FIGURE 7 is a bottom isometric view of a stand for use with the invention;
FIGURE 8 is a top perspective view of a mat for use with the invention;
FIGURE 8A is a top perspective view of an alternative mat for use with the invention;
FIGURE 8B is a sectional view taken substantially along line 8B - 8B of FIGURE 8A;
FIGURE 9 is a front sectional view of an assembled pet feeding system;
FIGURE 10 is a side sectional view of an assembled pet feeding system;
FIGURE 11 is a top perspective view of a pet feeding system according to the invention, showing its spatial relationship to a feeding pet;
FIGURE 12A is a top rear perspective view of a further embodiment of a stand for use in the pet feeding system of the invention;
FIGURE 12B is a fragmentary top rear perspective view of the stand shown in FIGURE 12A, a further embodiment of a bowl being shown installed into a left bowl receptacle of the stand;
FIGURE 13 is a longitudinal sectional detail taken substantially along line 13 - 13 of FIGURE 12B;
FIGURE 14 is a longitudinal sectional detail taken substantially along line 14 - 14 of FIGURE 12B;
FIGURE 15 is a top perspective view of a further embodiment of a mat for use with the invention;
FIGURE 15A is a longitudinal sectional view taken substantially along line 15A - 15A of FIGURE 15;
FIGURE 15B is a transverse sectional view taken substantially along line 15B - 15B of FIGURE 15;
FIGURE 16 is a top perspective view of a further pet feeding system according to the invention, showing two bowls installed in receptacles integrally formed in a mat;
FIGURE 17 is an exploded view of the pet feeding system shown in FIGURE 16;
FIGURE 18 is a bottom perspective view of a mat used in the pet feeding system shown in FIGUREs 16 and 17;
FIGURE 19 is a longitudinal sectional detail taken substantially along line 19 - 19 of FIGURE 16; and
FIGURE 20 is a transverse sectional detail taken substantially along line 20 - 20 of FIGURE16.

### DETAILED DESCRIPTION

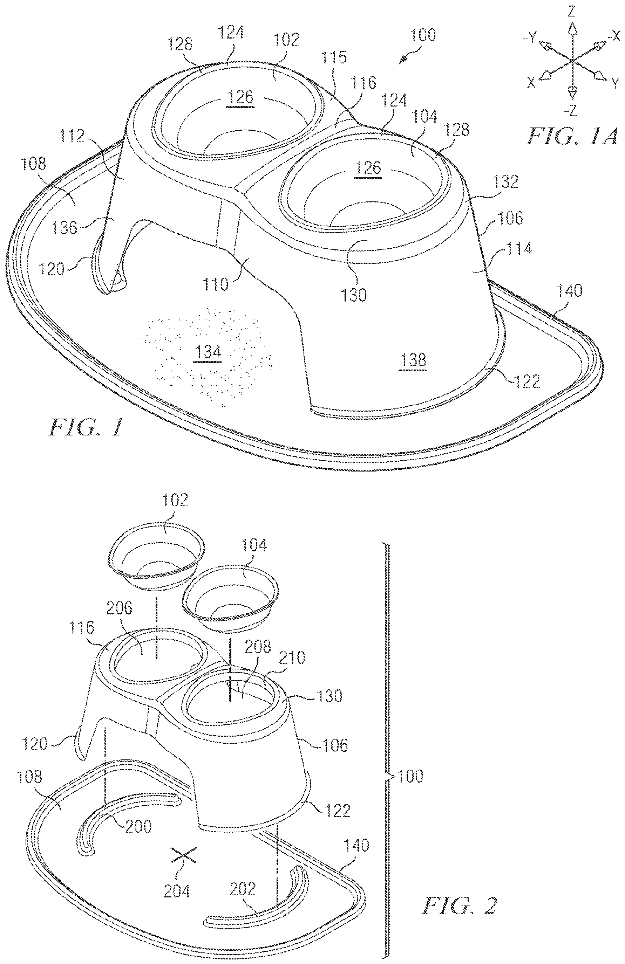

A pet feeding system is generally indicated by 100 in FIGURE 1. In this illustrated embodiment, the feeding system 100 has four components: first and second bowls 102 and 104, a stand 106, and a mat 108. In other embodiments, there may be only one such bowl or there could be more than two bowls.

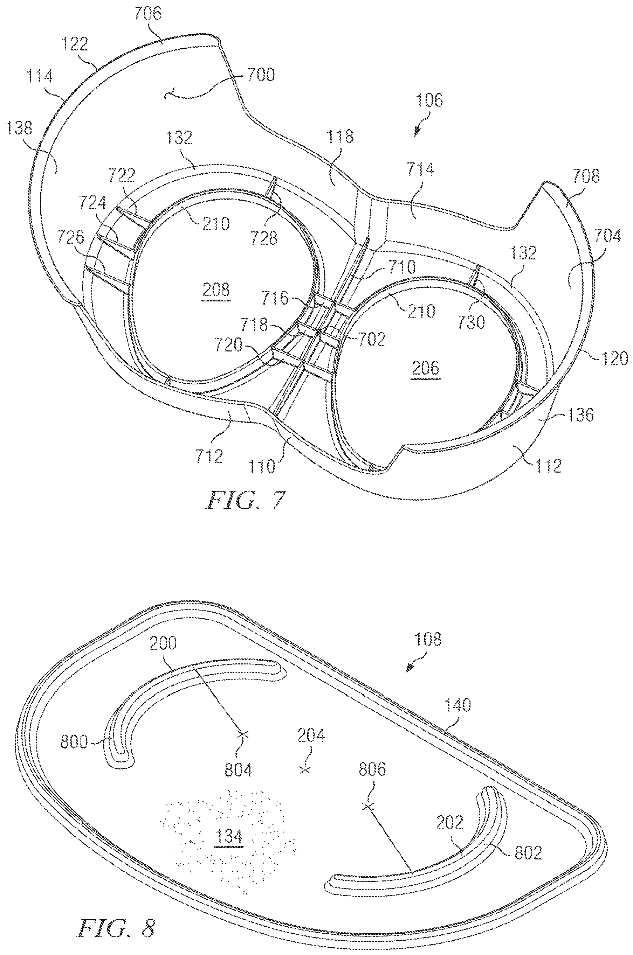

The stand 106 has a front 110 that is joined by a continuous curved wall to a left side 112 and by a continuous curved wall to a right side 114. Front 110 is concavely curved at its center. A top 115 is integrally molded with, and spans across, the front 110, left side 112 and right side 114. The stand top 115 has a stand top surface 116. The stand 106 further has a back or a rear side 118, shown for example in FIGURE 7, to which the left and right sides 112, 114 are joined by respective continuous curved walls. The left side 112 and the right side 114 downwardly extend from the top 115 respectively to a left base 120 and a right base 122. In the illustrated embodiment, bases 120 and 122 are distinct and are spaced from each other in a "*y*", transverse or width direction (see FIGURE 1A). In other embodiments, the bases 120, 122 may be continuous with each other and form a single base with an unbroken circumference, or may divided further, for example to create two distinct left legs and two distinct right legs (not shown).

Bowls 102, 104 may be stamped from stainless steel and in one embodiment may be polished. More particularly, bowls 102, 104 may be stamped from 300-series stainless steel, such as Type 301 or Type 304, and even more particularly may be stamped from Type 304 stainless steel, used for containers and implements for food for human consumption. Bowls 102, 104 are thus easy to keep clean and won't harbor microbial contamination. Each bowl 102, 104 has an upper edge 124 and, downwardly and inwardly extending therefrom, an interior surface 126. Each bowl 102, 104 further has a laterally extending lip 128 that, as received in the stand 106, will substantially reside in a horizontal or *xy* plane.

FIGURE 1A depicts a frame of reference used in this specification. Direction *x* is toward the front of the stand 106, while -*x* is toward the rear of the stand. Direction *y* is at 90 degrees to direction *x* and is toward the right side of the stand 106, while direction -*y* is toward the left side. Direction *z*, at ninety degrees to both directions *x* and *y*, is an upward vertical direction, while direction -*z* is vertically downward. An *xy* plane is horizontal, while *xz* and *yz* planes are vertical. The (*x*, -*x*) axis is longitudinal or front-to-rear, the (*y*, -*y*) axis is transverse or side-to-side, and the (*z*, -*z*) axis is vertical.

The stand 106 is preferably integrally injection molded of a tough thermoplastic polymer compound such as polypropylene or ABS and may have a textured exterior surface. The compound used to injection-mold stand 106 may include silver-based antimicrobial particles. Stand 106 may be molded in any of a range of colors. A zone 130 of the top surface 116 extends from the perimeter of the bowl lips 128 to a shoulder 132, at which point the top surface has curved transitions to exterior surfaces of the front 110, left side 112, right side 114 and back 118 of the stand 106. The zone 130 is downwardly sloped relative to the horizontal or *xy* plane, so that zone 130 will readily shed food particles and fluids onto a general top surface 134 of the mat 108. Peripheral zone 130 occupies all of the top surface 116 that is laterally exterior to the bowl lips 128, so that all of the open area of the top surface 116 will be sloped and will cascade food and water to the mat.

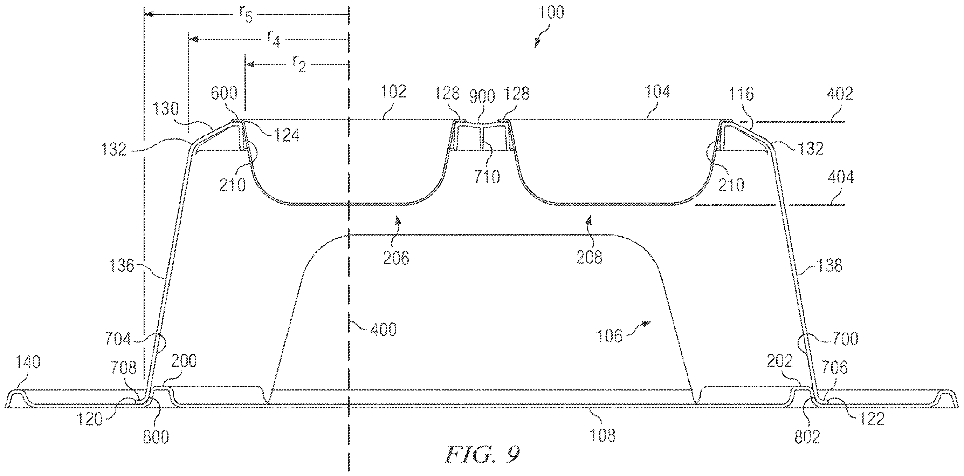

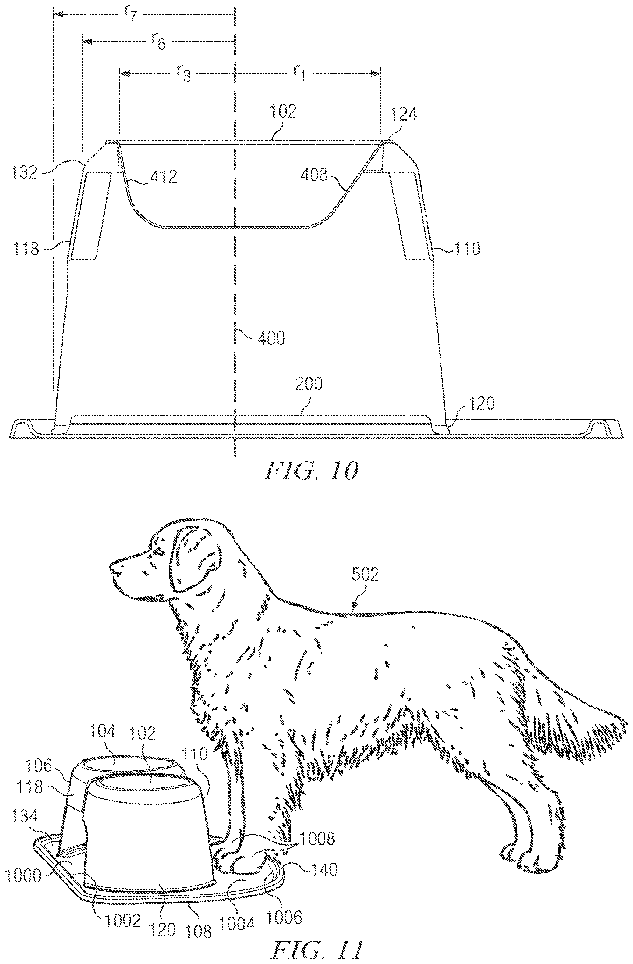

The left base 120 and right base 122 define an area between them that is considerably smaller than the area of the general top surface 134 of the mat 108. The shoulder 132 of the stand top surface 116 is laterally interiorly spaced from the positions of the left and right bases 120, 122. A wall 136 forming the left side 112 slopes downwardly and outwardly until it terminates in base 120, and a wall 138 forming the right side 114 slopes downwardly and outwardly until it terminates in base 122. Walls making up front 110 and rear 118 are likewise sloped downwardly and outwardly from top surface shoulder 132. This provides greater lateral stability and better resistance against lateral forces placed on stand 106 by the pet, as will be further described in conjunction with FIGUREs 9 and 10 below.

The mat 108 may be injection-molded, preferably from a thermoplastic elastomer compound. As molded, the mat 108 may have a Shore A hardness in the range of 60 to 85. The mat 108 may be manufactured with an antimicrobial additive (such as ionic or particulate silver that is nontoxic to mammals) that will inhibit the growth of mold, fungus, algae or bacteria that otherwise could stain or cause odors. As an alternative to injection molding and in one embodiment, mat 108 could be thermoformed from a sheet of material having a substantially uniform thickness. Mat 108 may be molded in any of a range of colors. The mat 108 has a raised peripheral margin 140 that works to retain food particles and fluids.

The exploded view of FIGURE 2 reveals structure on mat 108 that cooperates with the left and right bases 120, 122 to resist movement of the stand 106 on the mat 108 in any lateral direction. In the illustrated embodiment, this structure consists of a pair of raised features 200 and 202, which more specifically are ribs that are formed as a pair of arcs that are concave relative to a center 204 of the mat 108. Each bowl 102, 104 is received in a respective bowl opening 206, 208 defined in the stand top surface 116. Each bowl opening 206, 208 has a curved perimeter and a front-to-back diameter, as drawn at a right angle to the bowl opening axis, that is greater than a side-to-side diameter drawn at a right angle to that axis. The bowl openings 206, 208 may each be defined by a wall 210 that downwardly depends from the stand top surface 116. The bowls 102, 104 have shapes that mate with bowl openings 206, 208 and may be easily removed by hand for cleaning or filling and manually reinstalled in openings 206, 208. Likewise, the stand 106 may be easily lifted off of mat 108 for cleaning and then located back onto mat 108 with the aid of arcuate locating ribs 200, 202.

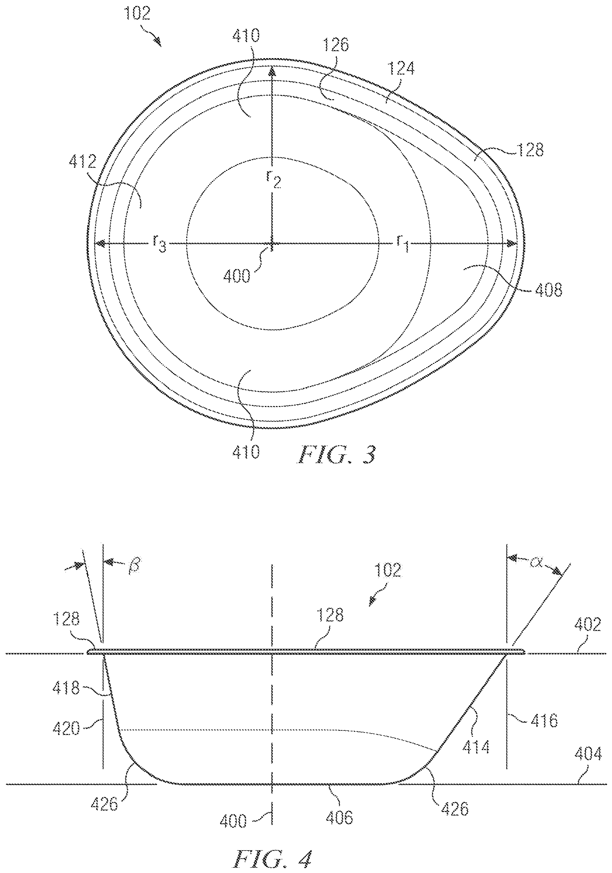

Details of a representative bowl 102 are shown in FIGUREs 3 and 4. The bowl 102 is disposed around a bowl axis 400 that is aligned in the vertical or *z* direction. The bowl 102, as installed in the stand 106, will extend between a horizontal or top plane 402 and a bowl bottom plane 404. A radius *r₁* from bowl axis 400 to upper edge 124, in an x direction, will be considerably greater than a radius *r₂* from bowl axis 400 to upper edge 124 in a *y* direction. Radius *r₁* will also be significantly greater than a radius *r₃* drawn from bowl axis 400 in a (-*x*) direction to the rear of the stand, as shown. Radii *r₁*, *r₂* and *r₃* are all drawn in *xy* plane 402. The bowl 102 basically is lobed toward its front. Radius *r₁* gradually decreases to radius *r₂* as a function of angular displacement away from the *x* direction. Radii *r₂* and *r₃* may be substantially similar.

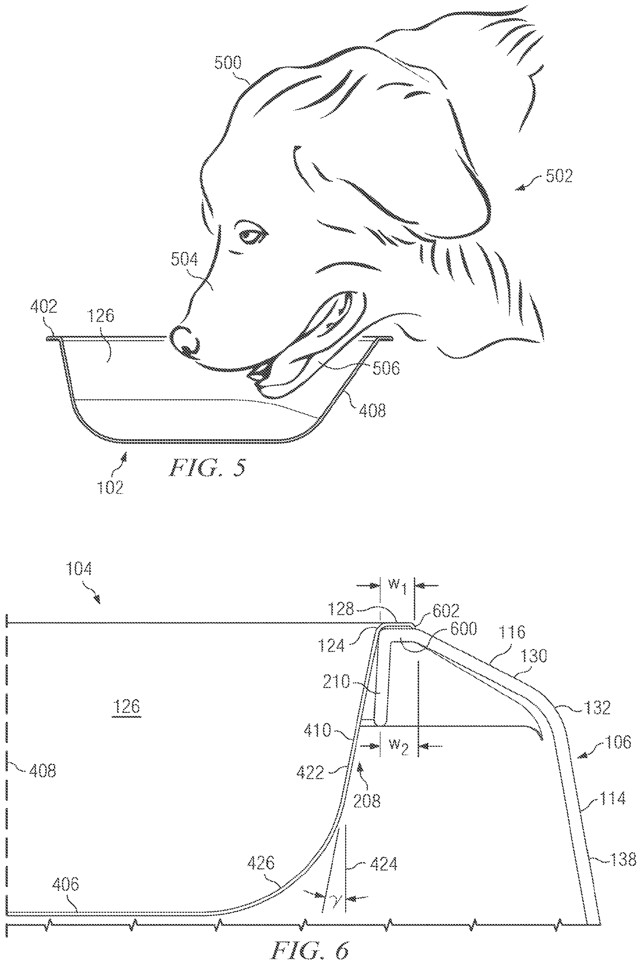

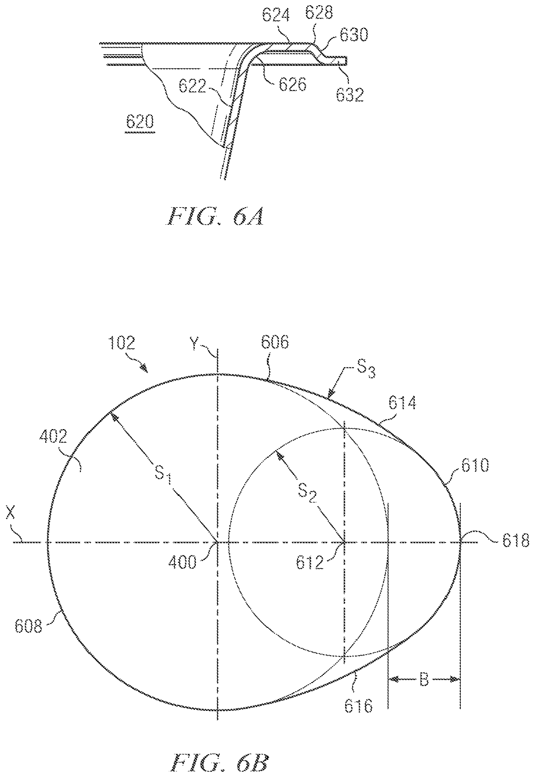

One shape of each of bowls 102, 104 may be arrived at as follows. FIGURE 6B is a schematic plan view of a periphery 606 of a bowl 102, as it appears at top plane 402. At top plane 402, the bowl periphery 606 may be a composite of three sets of curves: a circular segment 608 that is disposed at a radius S₁ from the bowl axis 400; a circular segment 610 that is drawn around a second center 612, and at a radius S₂ therefrom; and two circular segments 614, 616 that each connect an end of circular segment 608 to a respective end of circular segment 610. Segments 614 and 616 each have a radius S₃ around respective third centers that do not appear in Figure 6B. Radius S₁ may be chosen to be twice radius S₂. Radius S₃ may be chosen to be twice radius S₁. Bulge B, being the displacement of a frontmost point 618 of periphery 606 from the end of radius S₁ along the X axis, may be chosen as 0.4S₁.

The bottom 406 of the bowl is initially drawn as a circle (not shown) around bowl axis 400, at a radius that is smaller than S₁. The sides of the bowl are then lofted from periphery 606 to the bottom bowl circle. The bowl shaped is then radiused at a constant radius at its bottom to produce the curved transitions 426 and the shape that is seen in FIGUREs 4 and 6.

As installed in the bowl openings 206, 208, in the illustrated embodiment the longest radii (n) of bowls 102, 104 will be parallel to each other and to the *x* direction.

A bottom 406 of the bowl 102 may be flat, as shown, to aid in stability while filling. A front portion 408 of the curved interior surface 126 has a more gradual draft than does a side portion 410 or a rear portion 412. In the illustrated embodiment, an *xz* section of the front portion 408, as including the bowl axis 400, includes a straight segment 414. This straight segment 414 makes an angle α with respect to a vertical reference 416. An *xz* section of the rear portion 412, as including the bowl axis 408, includes a straight segment 418. Straight segment 418 makes an angle β with a vertical reference 420, with α > β. Turning momentarily to FIGURE 6, a *yz* section of the side portion 410, as including the bowl axis 408, includes a straight segment 422. Straight segment 422 may make an angle γ with a vertical reference 424, with α > γ. Angles β and γ may be similar to each other. Straight segments 416, 418, 422, and the curved surfaces of which they are a part, may be joined to the bottom 406 by curved transitions 426. In alternative embodiments, one or more of the straight segments 416, 418 or 422 may be replaced by curves. Nonetheless, as taken in any particular horizontal plane, the slope of the front portion 408 will remain gentler than will the slopes of the side portions 410 or rear portion 412.

FIGURE 5 depicts the relationship of a representative bowl 102, here shown in an xz sectional view, and the head 500 of a dog 502. Dog 502, as is typical of most breeds, has a pronounced nose 504 and jaw 506. When dog 502 wants to eat or drink from bowl 102, it will insert its jaw 506 and nose 504 into the bowl 102. The gradual draft of the front portion 408 of the bowl interior surface 126 makes this easy for the dog to do. And because a good portion of the dog's nose 504 and jaw 506 are below bowl top plane 402, the escape of food particles and water out of bowl 102 is reduced.

Another technical advantage of the invention derives from the provision of noncircular bowls 102, 104 for removable installation into respective noncircular openings or receptacles 206, 208 in stand 106. Dogs in particular make extensive use of their tongues while feeding and little or no use of their paws. A dog often will lick the internal surface of the bowl 102, 104, often imparting a considerable amount of force to the bowl. If bowls 102, 104 and openings 206, 208 were circular, the licking action of the dog would cause the bowl to spin within the bowl receptacle, having a tendency to eject food and water particles and also tending to encourage the inadvertent separation of the bowl from the stand 106. The noncircularity of the bowls 102, 104 and their bowl receptacles 206, 208 prevents this, and keeps the extended front lobe of each bowl 102, 104 oriented toward the front of the stand 106 and toward the pet.

FIGURE 6 is a *yz* sectional detail of right bowl 104 as it is received into right bowl opening 208 of stand 106. As mentioned before, the top surface 116 of the stand 106 has two zones: a peripheral zone 130, and an annular zone 600 that immediately surrounds each bowl opening 206, 208. The annular zone 600 can be flat and has a width *w₂*. The bowl lip 128 has a width *w₁*. The bowl lip 128 extends laterally from the bowl upper edge 124. The exterior surface of bowl upper edge 124 is (in this view) to the left or laterally interior of the inner surface of bowl opening wall 210, by an intentional gap that will ensure that the bowl can be easily inserted into and taken out of the bowl opening 208. The inner end of lip 128 is therefore slightly laterally interior of an inner end of the zone 600. On the other hand, it is important that a turned-down finishing lip 602 of the preferably metal bowl 104 land on zone 600 rather than on sloped zone 130. Therefore, the difference between zone width *w₂* and lip width *w₁* should be a manufacturing tolerance minus a bowl/opening fitting gap. The widths *w₂* and *w₁* will be substantially similar to each other, and in one embodiment could be identical. This will minimize the exposure of annular zone 600 to stray food particles or fluids, most or all of which will then be received by sloped zone 130 of the top surface 116, and from there cascade to mat 108.

In the illustrated embodiment, the peripheral zone 130 is shown to be flat until it transitions, at shoulder 132, to a right sidewall 138 of the side 114. The peripheral zone 130 could take on a more convex shape, so long as every point on it is downwardly and outwardly sloped to optimally shed stray food and water.

FIGURE 6A is a *yz* sectional detail of an alternative bowl 620. Bowl 620 is manufactured from the same materials as those described for bowl 102. Bowl 620 has a curved sidewall 622 that is straight in this section. Sidewall 622 is joined at its upper end to a horizontally outwardly extending annular portion 624, by means of a curved transition 626. At its horizontally outer end 628, annular portion is joined to a downwardly sloped portion 630 that in turn is joined to an outer, horizontally disposed annular lip 632. Lip 632 will land on zone 600 of the stand 106. Finishing the edge of bowl 620 in this fashion makes for a bowl that is easier to clean and is less likely to harbor bacteria-bearing food particles or fluids.

FIGURE 7 shows the underside of stand 106. In the illustrated embodiment, right wall 138 downwardly and outwardly extends from top shoulder 132 and can be a curved sheet. At least the bottom portion of the interior of right wall 138 is formed as a concavely arcuate surface 700 that faces a center 702 of the stand 106. However, the radius of arc of the surface 700 is substantially less than its distance to center 702. Similarly, the left side wall 136 includes, at least at its lower end, a concavely arcuate surface 704. The radius of arc of the surface 704 is substantially less than its distance to center 702. In the illustrated embodiment, surfaces 700, 704 are conical rather than cylindrical sections and widen as they extend downwardly from top surface shoulder 132. Curved walls 136, 138 will exhibit greater rigidity than planar walls (not shown) at the same locations.

Right wall 138 terminates in a right base or foot 122 that may be formed as a horizontally outwardly extending flange 706. Left wall 136 terminates in a left base or foot 120 that may be formed as a horizontally and outwardly extending flange 708.

The underside of stand 106 is not seen in normal use and is less likely to acquire food or water particles. It is therefore a good site for reinforcing ribs to stiffen the structure. In the illustrated embodiment, these include a center rib 710, disposed in an *xz* plane and on center 702 that extends from a front wall 712 to a rear wall 714. Three spaced-apart transverse ribs 716, 718 and 720, in yz planes, intersect rib 710 and connect to bowl opening walls 210 on both of their ends. A set of three yz stiffening gussets 722, 724 and 726 connect bowl opening wall 210 of opening 208 to right wall 138; a similar set of stiffening gussets (not all shown) are disposed between the bowl opening wall 210 of opening 206 and left wall 136. A triangular xz gusset 728 may connect wall 210 of opening 208 to back wall 714, and a similar gusset 730 may connect wall 210 of opening 206 to back wall 714. Similar gussets may connect the wall 210 of openings 208, 206 to front wall 712.

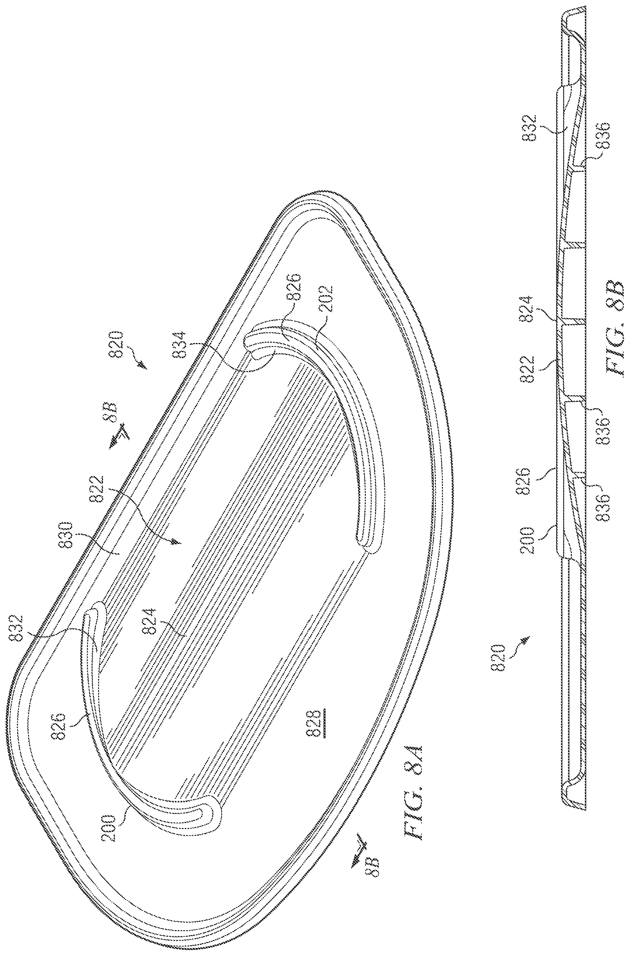

An area mat 108 for use with the invention is shown in FIGURE 8. In the illustrated embodiment, each locating feature or rib 200, 202 is upstanding from general upper mat surface 134 and is formed as an arc. Each rib 200, 202 has an exterior frustoconical surface 800, 802 that is meant to mate with a respective one of internal surfaces 704, 700 of left and right stand walls 136, 138. Surface 800 is at least roughly a surface of rotation around a vertical axis going through point 804. Surface 802 is at least roughly a surface of rotation around a vertical axis going through point 806. Points 804 and 806 are considerably displaced, in a *y* or -*y* direction, from mat center 204. This insures that the ribs 200, 202 will prevent the rotation of stand 106 around its vertical center 702 relative to mat 108.

Ribs 200, 202 thus are raised features that cooperate with nonhorizontal surfaces of stand bases 120, 122 to prevent movement of the stand 106 in any lateral direction; a vector component of at least one of arcuate surfaces 800, 802 will resist movement in *x, -x, y* or *-y* directions or a direction which is any combination thereof. Structure alternative to that shown could do the same job. For example, instead of independent ribs 200, 202, mat 108 could have a mesa that stretches between them but that still has lateral exterior arcuate surfaces 800, 802. The ribs 200, 202 could be of shapes other than arcs, which then would cooperate with internal wall surfaces 700, 704 that would have complementary shapes. It is also possible to break up each rib 200, 202 into spaced-apart segments or individual columns.

One advantage of ribs 200, 202 as they appear in the illustrated embodiment is that it is easy to clean them and the area in between them. Another advantage is that, once the stand walls 136, 138 have been lowered in place on top of them, they will not be easily visible (they are short enough, as seen in FIGUREs 1 and 8, to be screened from view by walls 136, 138 from the front or back, or even at a considerable angle from the front or back), and will be sheltered from falling food particles and fluid. For similar reasons, it is preferred to have the mat cooperating structure 200, 202 laterally interior to the stand walls 136, 138 instead of laterally exterior to them. In the illustrated embodiment, side walls 136 and 138, and their curved transitions to front and back walls 712 and 714, subtend arcs that are enough larger than the arcs of ribs 200, 202 that the latter can be seen only with difficulty once system 100 is assembled.

In a preferred embodiment, the arc subtended by rib exterior surface 800 should be only slightly less than the arc subtended by inner wall surface 700. This insures maximum contact for support, but also minimizes gaps that could cause food particle trapping. A smaller arc for rib 800 would create more of a gap between wall inner surface 700 and the general top surface of mat 108, where food may trap. The arc of rib exterior surface 802 likewise should be only slightly shorter than the arc of inner wall surface 704.

An alternative embodiment of a mat 820 for use with the invention is shown in FIGUREs 8A and 8B. Mat 820 in general is similar to mat 108, and is made from materials similar to those described for mat 108, but instead of the area between ribs 200, 202 being flat, an area 822 is vaulted or barrel-shaped, with an axis of the "barrel" being in a *y* direction. A top 824 of the vault 822 can be at the same height as the top 826 of ribs 200, 202. In operation, when fluid or particulate matter drops on vaulted surface 822, it will tend to flow or roll downhill and out onto peripheral areas 828, 830. Providing the vaulted surface 822 also decreases the surface area of internal facing surfaces 832, 834 of ribs 200, 202. That decreases the amount of surface that can accumulate bacteria and the like and decreases the amount of surface that needs to be cleaned. As shown in FIGURE 8B, vaulted surface 822 may be supported with a plurality of ribs 836 that downwardly extend from surface or panel 822 and are supported by the floor.

The assembled pet feeding system in a *yz* elevational section is seen in FIGURE 9. The interior surface 704 of left leg 136 fits to external surface 800 of rib 200. The interior surface 700 of right leg 138 fits to external surface 802 of rib 202. Foot flanges 706, 708 provide more lateral support and sectional rigidity. As thermoformed from a sheet of uniform thickness, or as injection molded so that all walls are close to a nominal design thickness, the ribs 200, 202 can be hollow.

The bottoms of bowls 102, 104 reside in a bottom plane 404 that, in this embodiment, is elevated by a considerable distance above the mat 108. Pet feeding systems 100 can be made in various sizes, in which the size of the food and water bowls 102, 104, and their height from the mat 108, can be individually altered.

The illustrated embodiment includes two spaced-apart bowls 102, 104. The peripheral zone 130 of the top surface 116 includes a concave valley 900 in between the lips 128 of the bowls 102, 104. The bottom of this valley 900 is itself sloped in an *x* and in a *-x* direction from a central point, providing sloped paths for stray food particles and water to cascade downward and off of stand 106. In multiple-bowl embodiments, all portions of the third zone of the stand surface are downwardly and outwardly sloped relative to the nearest bowl axis 400.

The stand 106 is outwardly splayed in *x*, *-x* and *y*, *-y* directions to give it greater stability and resistance against lateral forces. A radius *r₄* from axis 400 of bowl 102 to the top surface shoulder 132 is greater than bowl radius *r2.* A radius *r₅* from axis 400 to base 120, and in the -*y* direction, is greater than radius *r₄*. The mass of the preferably stainless steel bowl 102 and its contents will be well inward from left wall 136. Similar relationships obtain for bowl 104. Inclined walls 136, 138 are braced to withstand shear forces in the *yz* plane. In the *xz* plane shown in FIGURE 10, a radius *r₆* from axis 400 to the top surface shoulder 132 is greater than either bowl radii *r₁* or *r₃.* A radius *r₇* from axis 400 to base 120 is greater than radius *r₆*. The mass of bowl 102 is well inward from either the back 118 or the front 110 of the stand 106. Similar relationships exist for bowl 104. The inclined back and front 118, 110 of the stand 106 are braced to withstand shear forces in the *xz* plane.

As best seen in FIGURE 11, a total area of the mat 108 is much larger than an area taken up by or located between the stand bases 120 and 122. The stand 106 is sited well to the back of the center of mat 108. A rear region or area 1000 of mat 108 extends rearwardly from the back 118 of the stand 106 to a rear margin 1002 of mat 106. Margin 1002 can be straight for placement against a wall. A front region or area 1004 of mat 108 extends forwardly from the front 110 of the stand 106 to a front margin 1006 of the mat 108. Front margin 1006 can be convexly curved. Regions 1000, 1004 are extensive enough to catch most stray food and water. But front region 1004 is considerably larger than region 1000, so that it can accommodate the front paws 1008 of a feeding pet 502. The convexly curved shape of margin 1006 also helps in this regard.

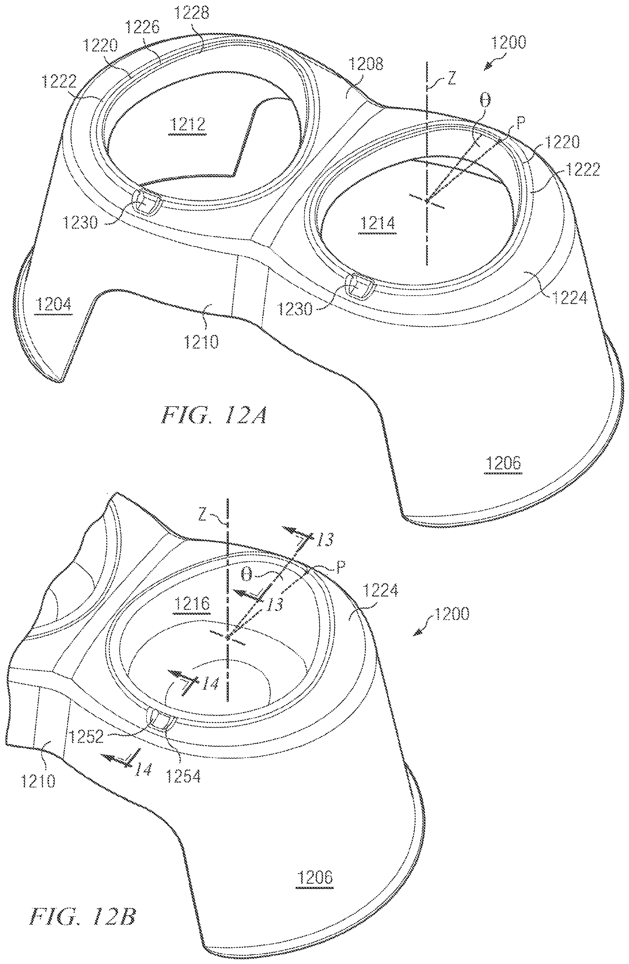

FIGUREs 12 - 14 depict a further embodiment of the invention incorporating certain improvements over the embodiments disclosed in FIGUREs 1 - 11. A pet stand indicated generally at 1200 has a base 1202 that can be removably placed on a mat (not shown in FIGUREs 12 - 14; any of the mats 108, 820, 1500 described herein will work with stand 1200). The stand 1200 may be made from the same materials as those recited for stand 106. Left and right sides 1204 and 1206 extend upwardly from the base 1202 to a stand top 1208. As in the last embodiment, the left and right stand sides 1204, 1206 each form convex surfaces and are joined together by a back 1210 and a similar front (not shown); in the illustrated embodiment, the sides, front and back are formed by a continuous sidewall. The back 1210 is meant to be positioned remotely or away from the pet 502, while the front is meant to be positioned to be proximate to the pet 502.

The stand top 1208 spans from the back 1210 to the front and from side 1204 to side 1206. Top 1208 has formed therein at least one, and in the illustrated embodiment two, bowl receptacles 1212 and 1214. As in the previously described embodiment the bowl receptacles preferably are oblong. Each bowl receptacle 1212, 1214 is adapted to receive a similarly oblong-shaped bowl 1216 (one shown). As measured in a horizontal plane at its upper periphery, a major axis of bowl 1216, in a front-to-back direction, is longer than a minor axis disposed in a side-to-side or transverse direction.

The stand top 1208 has a top surface 1218 that, in the illustrated embodiment, has first, second and third zones 1220, 1222 and 1224. A respective first zone 1220 and a respective second zone 1222 are provided for each bowl receptacle 1212, 1214. The first zone 1220 is disposed to be adjacent an upper periphery 1228 of bowl receptacle 1212 or 1214 and includes an upwardly convex ring 1226 that completely laterally surrounds bowl receptacle 1212 or 1214. Extending laterally outwardly (relative to vertical axis Z of the receptacle and bowl) from the first zone 1220 is the second zone 1222. The second zone 1222 of the top surface is either horizontal (perpendicular to axis Z) or is radially outwardly and downwardly sloped. In the illustrated embodiment, second zone 1222 is flat and horizontal.

The second zone 1222 completely laterally surrounds the first zone 1220 for any particular bowl receptacle 1212 or 1214, except where zone 1222 is interrupted by a finger notch 1230. The elevation of the top surface 1218 of stand top 1208 within second zone 1222 is less than an upper limit 1232 of the upwardly convex ring 1226.

Disposed radially outwardly from the second zones 1222 (there is one per bowl receptacle) is a single third zone 1224. The slope of third zone 1224 varies from point to point, but any point on it slopes radially outwardly and downwardly relative to the closest bowl/receptacle axis Z, so that food and water particles are easily shed off of zone 1224 and not retained. The third zone 1224 separates the second zones 1222 and completes the top surface 1218 of the stand top 1208. Stand sides 1206, 1208 and connecting back 1210 (and the opposed front) each make a preferably curved shoulder with a lower end of third zone 1224.

FIGUREs 12B, 13 and 14 all show a bowl 1216 removably installed in the left bowl receptacle 1214 (the view of FIGUREs 12A and 12B being from the rear). The right and left bowl receptacles 1212, 1214, and the bowls 1216 meant to be received into them, may be different from each other in size or detail but in the illustrated embodiment they are the same. Bowls 1216 may be manufactured from the same materials and in the way described for bowl 102. From the upper periphery 1228 of the bowl receptacle, and as extended from an inner wall of the convex ring 1226, a sloped bowl receptacle sidewall 1234 extends downwardly and radially inwardly to its lower and inner end 1236. In this embodiment, inner end 1236 is free, leaving an opening in the receptacle from the stand top 1208 to the mat. In other embodiments, receptacles 1212, 1214 may be closed concave shapes.

Relative to a vertical reference, and at any particular point P at a horizontal angular location θ as measured around receptacle and bowl axis Z, and in a given horizontal plane, the slope of sidewall 1234 will subtend an angle φ_{R}. At this horizontal angular location and in the same horizontal plane, a sidewall 1238 of the bowl 1216 will subtend an angle φ_{B} relative to a vertical reference that is substantially similar to, but slightly gentler than, angle φ_{R} at that location. Said another way, the draft of the bowl sidewall 1238 is slightly more pronounced than a corresponding draft of the bowl receptacle sidewall 1234. The difference between φ_{B} and φ_{R} may be chosen to be in the range of 1/2 to 2 degrees and in one embodiment is about 1 degree.

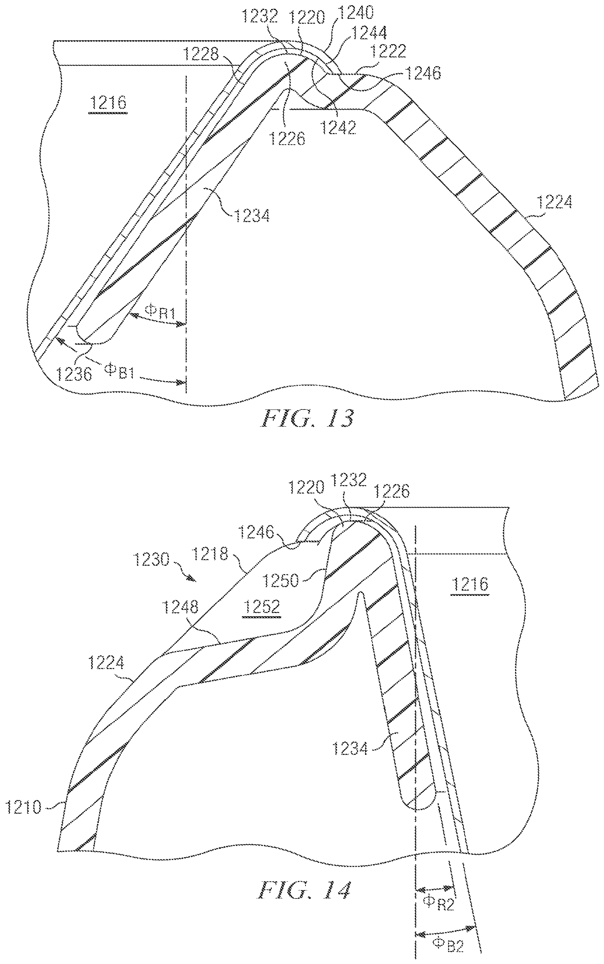

As taken in any given horizontal plane, the slopes of bowl sidewall 1238 and bowl receptacle sidewall 1234 vary as a function of horizontal angle θ from the axis. FIGURE 13 is a section taken where θ = 0°, or at the front of the stand 1200, while FIGURE 14 is a section taken where θ = 180°, at the rear of the stand. As can be seen, φ_{B1}, taken at the front of the bowl 1216, is much larger / more gentle than φ_{B2}, taken at the rear of the bowl 1216; the bowl 1216 has a much shallower draft toward its front than its rear. The receptacle sidewall angles φ_{R1} and φ_{R2} vary in a conforming way so that they are substantially similar to, but slightly steeper than, the bowl angles taken at the same points. The gap between the bowl sidewall 1238 and the bowl receptacle sidewall 1234 increases with depth. In one embodiment, the gap is about .025 in. at the top of walls 1238, 1234, and is about .045 in. near wall end 1236.

A peripheral lip 1240 of the bowl 1216 has a lower surface 1242 that is finished in a downwardly concave ring 1244. A radius of the concave ring 1244 is chosen to be slightly larger than a radius of the upwardly convex ring 1226 of the stand top surface first zone 1220. In this way, the concave ring 1244 fits over and is slightly spaced from the convex ring 1226. An outer edge 1246 of peripheral lip 1240 preferably contacts or rests on a second zone 1222 throughout the entire circumferential length of second zone 1222, that is, throughout most of the circumference of the lip 1240. This supports the entire weight of bowl 1216. The nominal spacing (e.g., .020") of the concave ring 1244 from the convex ring 1226 ensures that lip edge 1246 will contact second zone 1222, minimizing any gaps between them. As installed, the outer edge 1246 is lower than an upper limit 1232 of the convex ring 1226. The interaction of the lower surface of the downwardly concave ring 1244 with the upwardly convex ring 1226 aids in centering and seating the bowl, and makes harder the possible dislodgment of the bowl 1216 from the bowl receptacle 1212 or 1214 by the pet.

As best seen in FIGURE 14, the finger notch 1230 interrupts and cuts through the second zone 1222 of top surface 1218 but not through the convex ring 1226. The finger notch 1230 has a slightly inwardly and upwardly sloped floor 1248 that inwardly extends from a point on the third zone 1224 to an inner notch wall 1250. Notch floor 1248 is lower in elevation than second zone 1222 of the top surface 1218; in one embodiment, it can be 0.32 inches deeper than second zone 1222 as measured at the inner wall 1250. The inner notch wall 1250 is angled steeply upward and joins the notch floor 1248 to the convex ring 1226, via appropriate curved transitions. Inner notch wall 1250 may be continuous with an outer wall of the convex ring 1226, as shown. The notch 1230 has a sharply upwardly sloped right side wall 1252 that joins a right end of the notch floor 1248 to the top surface 1218 of the stand top 1208. Notch 1230 is completed by a sharply upwardly sloped left side wall 1254 that joins a left end of the notch floor 1248 to the top surface 1218 of the stand top 1208.

The finger notch 1230 permits a pet owner to insert a second, third or fourth finger of the hand underneath edge 1246 of the bowl 1216, such that bowl lip 1244 may be grasped between the inserted finger and the thumb of the owner and the bowl 1216 lifted from the bowl receptacle 1212 or 1214. Finger notch 1230 is dimensioned so as to accomplish this purpose; the spacing between a top end of right sidewall 1252 from a top end of left sidewall 1254 may be about one inch. The floor and all walls of the finger notch 1230 are radially outwardly and downwardly sloped for drainage. Importantly, the notch 1230 does not open onto or continue into the interior of the bowl receptacle 1212 or 1214; the notch inner wall 1250 joins to the convex ring 1226 to provide a fluid-obstructing barrier all of the way around the periphery of the bowl receptacle 1212, 1214.

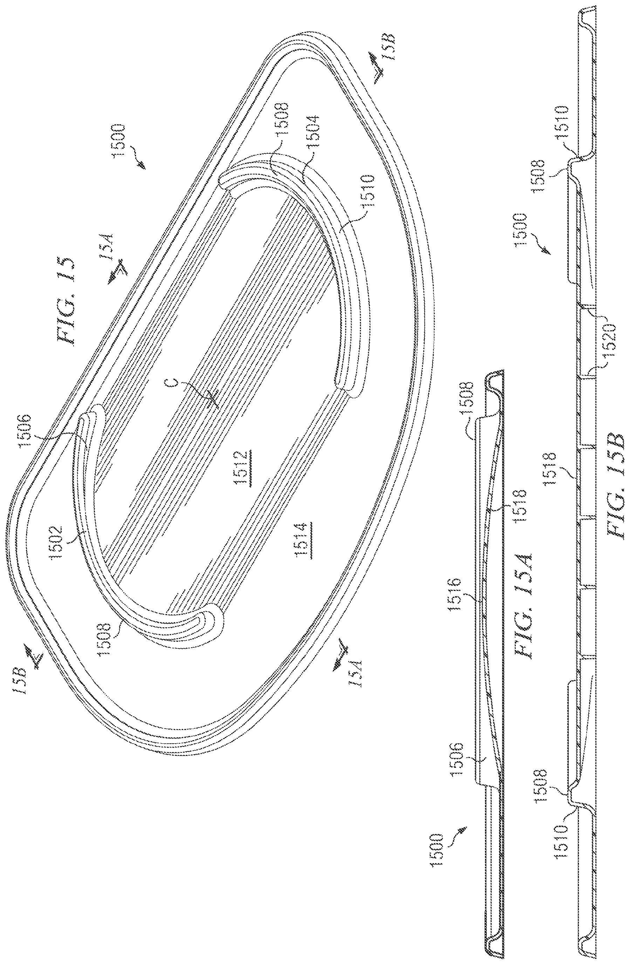

Referring now to FIGUREs 15, 15A and 15B, a further embodiment of a mat 1500 for use with the invention is shown. The mat 1500 is similar to the mat 820 illustrated in FIGUREs 8A and 8B, and the legs or sidewalls of the stand 106, 1200 fit to it in much the same way. Mat 1500 may be molded of the same materials as have been described for mat 108. As in mat 820, a pair of upstanding arcuate ribs 1502, 1504 have radii of arc that are significantly less than the distance of the inner wall 1506 of each rib 1502 to a center C of mat 1500. This intentional mismatch prevents the stand 106, 1200 from rotating relative to the mat 1500.

Each rib 1502, 1504 has a top surface 1508 and an outer wall 1510. Relative to the embodiment shown in FIGUREs 8A and 8B, the outer wall 1510 of each rib 1502, 1504 has been upwardly extended to better engage an inner wall of a stand base or leg (not shown). As before, all of the area 1512 in between the ribs 1502, 1504 is vaulted in a front-to-back direction so that particles of food and water are shed to a peripheral area 1514 of the mat 1500. A highest point 1516 of the central area 1512 is now below the top surfaces 1508 of the ribs 1502, 1504.

The mat 1500 preferably is injection-molded and its various parts are formed by walls that at least roughly conform to a nominal thickness for ease in molding. In such an embodiment, ribs 1502, 1504 are hollow and a web 1518 of the central area 1512 is propped up into a vaulted condition by spaced-apart, downwardly extending ribs 1520. In the illustrated embodiment, the ribs 1520 are parallel to each other and run in a longitudinal or front-to-back direction.

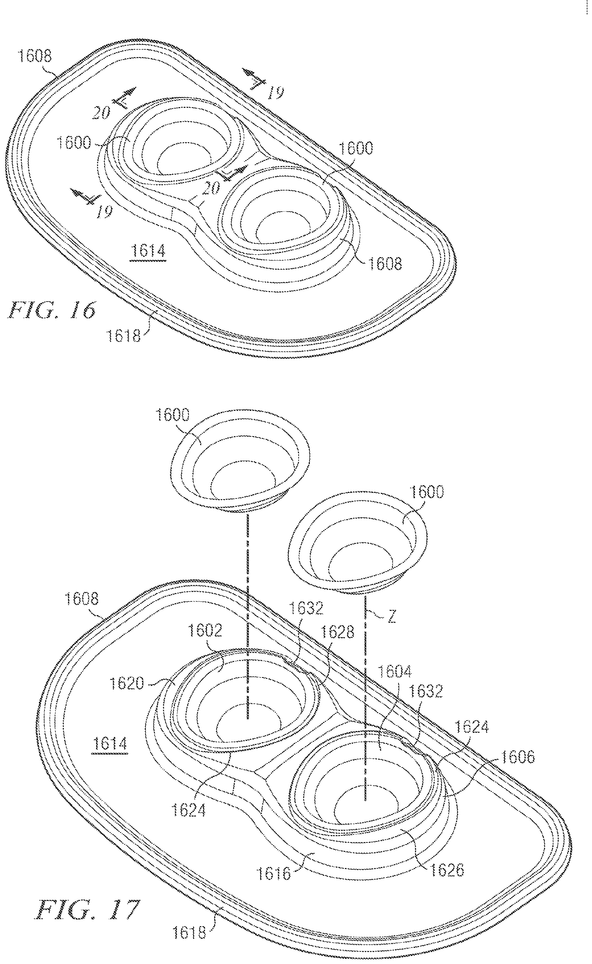

A further embodiment of the invention is illustrated in FIGUREs 16 - 20. In this embodiment, the stand is omitted and one or more bowls 1600 are received into respective bowl receptacles 1602, 1604 formed in a top surface of a central pier, mesa or eminence 1606 of a mat 1608. Preferably the bowls 1600 are generally similar to bowl 1216, and are made by of the same materials and in the same way as described for bowl 102. Each bowl 1600 is oblong: bowl 1600 has, as taken in a horizontal plane at its upper periphery, a major axis in a front-to-back direction that is longer than a minor axis thereof in a side-to-side direction. Bowls 1600 have a front wall draft that is gentler than the draft of the rear bowl wall, and are finished with a peripheral lip that has a lower surface that is a downwardly concave ring 1610 with an edge 1612. Mat 1608 may be injection-molded using a polymer compound described in conjunction with mat 108.

This embodiment is particularly suited to dogs with short legs, very small dogs and cats. For these pets, the bowls 1600 do not need to be elevated off of the peripheral top mat surface 1614 by more than the depth of the bowl receptacles 1602, 1604, and little more than the depth of the bowls 1600 themselves.

The central pier or mesa 1606 is integrally molded with the rest of the mat 1608. Pier 1606 is located so as to be spaced from any lateral edge 1618 of the mat 1608. Preferably, more of the peripheral top mat surface 1614 is disposed toward the front of the pier 1606 than is disposed to the rear of it. An upstanding wall 1616 of the pier 1606 upwardly extends from the general, peripheral mat surface 1614 and preferably is rounded or convexly curved as it transitions to a top surface 1620 of the pier 1606.

The top surface 1620 of the pier 1606 has a first zone 1622 that is immediately adjacent each bowl receptacle 1602, 1604, a respective second zone 1624 for each bowl receptacle that extends radially outwardly from the first zone 1622, and a third zone 1626 that laterally surrounds and spaces apart the second zones 1624. Each first zone includes an upwardly convex ring 1628 that completely surrounds a respective one of the bowl receptacles 1602, 1604. The second zone 1624 (one is accorded for each receptacle 1602, 1604) is either flat (as shown) or is downwardly and radially outwardly sloped relative to central vertical axis Z, and its elevation is less than an upper limit 1630 of the convex ring 1628. All points on the third zone 1626 are downwardly and outwardly sloped relative to the nearest bowl/receptacle axis Z, so that food and water particles will not accumulate on any part of third zone 1626 of the pier top surface 1618.

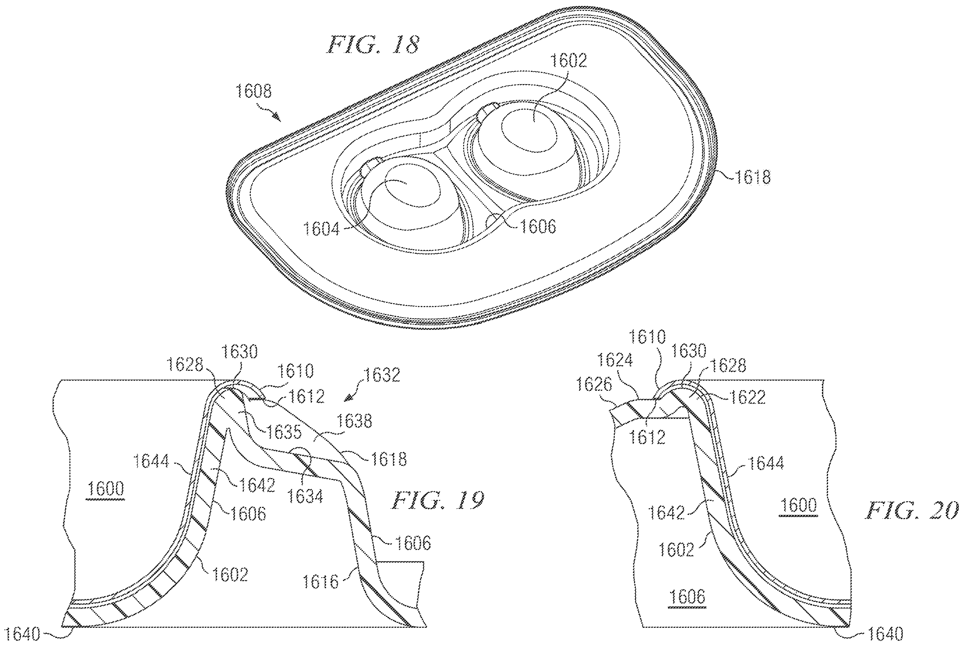

Each receptacle 1602, 1604 is provided with a finger notch 1632 that is similar in shape, position, dimensions and function to finger notches 1230 of the embodiment shown in FIGUREs 12A - 14. For each bowl receptacle 1602, 1604, a second zone 1624 completely laterally surrounds the receptacle 1602 or 1604, except where second zone 1624 is interrupted by a finger notch 1632. Notches 1632 preferably are located to the rear of respective bowl receptacles 1602, 1604. Each finger notch 1632 has a floor 1634 that slopes radially outwardly and downwardly until it transitions to third zone 1626 or, as shown, pier wall 1616. The floor 1634 is at an elevation that is lower than second zone 1624. Notch 1632 extends inwardly until it joins with a notch inner wall 1635. Notch inner wall 1635 extends upwardly and somewhat inwardly until it seamlessly meets an outer wall of convex ring 1628. In this way, the finger notch 1632 interrupts second zone 1624, but does not interrupt convex ring 1628, which therefore acts as a barrier to food and water particles. The notch 1632 is laterally bounded by a left wall 1638 that joins floor 1634 to the general top surface 1618 of the pier 1620, and a similar right wall (not shown in FIGURE 19).

Preferably, and as shown in FIGURE 20, each bowl 1600 is entirely supported by its edge 1612 resting on the second zone 1624 of the top surface 1618 of the pier 1606. The lower surface of downwardly concave ring 1610 fits over and is slightly spaced from the upwardly convex ring 1628, aiding in centering and seating bowl 1600 within receptacle 1602 or 1604 and also providing resistance to the bowl being dislodged out of the bowl receptacle 1602 or 1604 by the pet. The slight spacing ensures that edge 1612 will contact second zone 1624, minimizing gaps.

Unlike the embodiments including a mat, stand and bowls, each bowl receptacle 1602, 1604 is closed to prevent the spillage of food or water on the floor. Each receptacle 1602, 1604 has a lower surface 1640 that rests directly on the floor or other supporting surface, and is in the same plane as the lowest plane of the rest of the mat 1608. This provides support and structural stiffness. A draft of a bowl receptacle sidewall 1642 substantially matches the draft of a bowl sidewall 1644, and both of these drafts change in a uniform fashion, within a given horizontal plane, as a function of the lateral angle of the point being considered. As shown in FIGUREs 19 and 20, a draft of the bowl receptacle wall 1642 and a draft of the bowl sidewall 1644, taken at its rear end as shown in FIGURE 19, may be similar to a draft of the bowl receptacle sidewall 1642 and the bowl sidewall 1644 taken at a side of the bowl. But a draft of both the bowl receptacle sidewall 1642 and the bowl sidewall 1644 will be considerably gentler at the front of the bowl, similar to what is shown in FIGUREs 13 and 14. A gap or clearance, which may be on the order of 0.020 in., is maintained between the outer surface of bowl 1600 and the upper surface of receptacle sidewall 1642 at all points, so that bowl edge 1612 will contact second zone 1624 and support the entire weight of the bowl and its contents.

In summary, an improved pet feeding station incorporates bowls with forwardly extending portions and gradual drafts to easily accommodate the heads of feeding pets. A top surface of the stand is crowned to shed stray food particles and water. A mat of the system has structure that locates the stand and holds it in place against lateral shear and torsional forces. Convex rings surrounding bowl receptacles of the stand allow for easier indexing and location of the bowls to the stand and make harder the dislodgement of the bowls from the stand by the pet. A finger notch is provided adjacent each bowl receptacle so that a user may more easily remove the bowl from the stand for filling or cleaning.

While illustrated embodiments of the present invention have been described and illustrated in the appended drawings, the present invention is not limited thereto but only by the scope and spirit of the appended claims.

## Claims

1. A pet feeding system comprising:
a stand (1200) having a front, a back opposed to the front, first and second sides joining the front to the back, and a top (1208) connecting the front, back and first and second sides, at least one sidewall (1204, 1206, 1210) of the stand extending downwardly from the top and terminating in at least one stand base;
at least one bowl receptacle (1212, 1214) formed in the top, formed around a vertical axis and having a periphery;
a top surface (1218) of the top having first and second zones (1220, 1222), the first zone disposed to be adjacent to the periphery of said at least one bowl receptacle, the first zone having an upwardly convex ring (1226) that laterally surrounds the periphery of the at least one bowl receptacle, the upwardly convex ring having an upper limit, the second zone disposed to adjoin and extend radially outwardly from the first zone, the second zone being disposed below the upper limit of the convex ring; and
at least one bowl (1216) adapted to be installed into and removed from the at least one bowl receptacle by a user of the system and having a peripheral lip (1240), a lower surface of the peripheral lip formed as a concave ring (1244) that fits over the convex ring of the at least one bowl receptacle.

2. The pet feeding system of Claim 1, wherein the peripheral lip of the at least one bowl terminates in an edge (1246), the edge of the at least one bowl contacting the second zone of the top surface of the stand when the at least one bowl is installed in the at least one bowl receptacle, the upper limit of the convex ring of the first zone being above the edge of the at least one bowl when the at least one bowl is installed in the at least one bowl receptacle.

3. The pet feeding system of Claim 2, wherein the second zone of the top surface of the stand is flat and perpendicular to the vertical axis.

4. The pet feeding system of any preceding claim, wherein the top surface of the top of the stand further includes a third zone (1224) extending laterally outwardly from the second zone, all of the third zone being downwardly sloped, all of the top surface of the top of the stand that is laterally outward from the first zone being horizontal or downwardly and outwardly sloped relative to the axis.

5. The pet feeding system of any preceding claim, wherein said at least one bowl receptacle has a receptacle sidewall (1234) that downwardly and radially inwardly extends from the first zone of the top surface of the stand, a slope of the receptacle sidewall at a point, taken in a given horizontal plane, varying as a function of a horizontal angular position of the point relative to the vertical axis; and
a center of the at least one bowl being disposed on the vertical axis when the at least one bowl is installed in the at least one bowl receptacle, a bowl sidewall (1238) of the at least one bowl downwardly and radially inwardly extending from the peripheral lip of the at least one bowl toward the center, a slope of the bowl sidewall taken at a point on the bowl sidewall, in the given horizontal plane, varying as a function of the horizontal angular position of the point on the bowl sidewall relative to the axis, the last said slope of the bowl sidewall being substantially similar to the last said slope of the receptacle sidewall at the same horizontal angular position.

6. The pet feeding system of Claim 5, wherein the slope of the receptacle sidewall at the given angular position is in the range of about ½ to about 2 degrees steeper than the slope of the bowl sidewall at the given angular position.

7. The pet feeding system of any preceding claim, wherein the at least one bowl receptacle includes an opening through the top of the stand.

8. The pet feeding system of any preceding claim, wherein the second zone of the top surface of the top of the stand laterally surrounds the first zone except at a finger notch (1230), the second zone being horizontal or radially sloping outward and downward relative to the vertical axis, a floor (1248) of the finger notch being axially lower than the second zone and being joined thereto by spaced-apart left and right sidewalls (1252, 1254) of the finger notch, a radially inward wall (1250) of the finger notch joined to an outer wall of the convex ring such that the finger notch does not inwardly radially extend through to the at least one bowl receptacle, the floor of the finger notch extending inwardly underneath the edge of the peripheral lip of the at least one bowl when the at least one bowl is installed in the at least one bowl receptacle.

9. The pet feeding system of Claim 8, wherein a top end of the left wall of the finger notch is spaced from a top end of the right wall of the finger notch by a width of about one inch.

10. The pet feeding system of Claim 8 or 9, wherein the at least one bowl receptacle has a front to be disposed to be proximate to a pet and a rear to be disposed to be remote from the pet, the finger notch being positioned at the rear of the at least one bowl receptacle.

11. The pet feeding system of any preceding claim, wherein the at least one bowl receptacle is one of first and second bowl receptacles (1212, 1214) formed in the top of the stand, the at least one bowl being one of first and second bowls adapted to be respectively received in the first and second bowl receptacles.

12. The pet feeding system of any preceding claim, wherein the at least one bowl has an upper periphery residing in a horizontal plane, a major axis of the bowl disposed in the horizontal plane and perpendicular to the vertical axis and a minor axis disposed in the horizontal plane and perpendicular to the major axis and vertical axis, a diameter of the at least one bowl taken at the major axis being greater than a diameter of the at least one bowl taken at the minor axis.
